**Europäisches Patentamt**

**European Patent Office**

**Office européen des brevets**

(19)

(11) Numéro de publication: **0 122 196**
**B1**

# (12) FASCICULE DE BREVET EUROPÉEN

(45) Date de publication du fascicule du brevet:
05.11.86

(21) Numéro de dépôt: **84400672.6**

(22) Date de dépôt: **05.04.84**

(51) Int. Cl.⁴: **F 16 D  65/16,** F 16 D  65/74,
F 16 D  65/54, F 16 D  55/10,
F 16 D  55/22

(54) **Système d'actionnement hydraulique de frein.**

(30) Priorité: **08.04.83  ES 521784**

(43) Date de publication de la demande:
**17.10.84 Bulletin 84/42**

(45) Mention de la délivrance du brevet:
**05.11.86 Bulletin 86/45**

(84) Etats contractants désignés:
**DE FR GB IT**

(56) Documents cité:
**DE-A-2 521 575**
**DE-B-1 655 888**
**FR-A-1 412 045**
**GB-A-1 059 735**
**US-A-1 642 784**
**US-A-2 174 635**
**US-A-3 675 742**
**US-A-3 675 743**
**US-A-3 837 443**
**US-A-3 851 567**
**US-A-3 993 171**
**US-A-3 995 723**

(73) Titulaire: **BENDIX ESPANA S.A., Balmes 243,
Barcelona 6 (ES)**

(72) Inventeur: **Bacardit, Juan Simon, Calle Mallorca
451, Barcelona 13 (ES)**

(74) Mandataire: **Le Moenner, Gabriel, SERVICE
BREVETS BENDIX 44, Rue François 1er, F-75008
Paris (FR)**

EP 0 122 196 B1

LIBER, STOCKHOLM 1986

## Description

La présente invention concerne les systèmes d'actionnement hydrauliques de freins, notamment de véhicules, et plus particulièrement un système d'actionnement hydraulique de frein du type comprenant au moins un élément de friction disposé au voisinage d'un organe à freiner, un dispositif d'actionnement hydraulique comportant une chambre ayant au moins une partie expansible reliée à l'élément de friction et actionnable par un liquide sous pression pour déplacer l'élément de friction et l'amener en contact de friction avec l'organe à freiner, la partie expansible de la chambre étant définie par un soufflet métallique cylindrique comportant une extrémité frontale adjacente à l'élément de friction, et des moyens de raccordement du dispositif d'actionnement à au moins une source de liquide sous pression.

L'utilisation de soufflets métalliques expansibles dans les dispositifs d'actionnement ou moteurs hydrauliques de freins a déjà été envisagée, notamment dans les documents US-A-1 642 784 (frein à tambour), US-A-2 174 635 ou US-A-3 851 567 et US-A-3 675 743 (freins à disque). On sait également qu'un souci constant des constructeurs de freins est de fournir des freins pourvus de moyens de rattrapage d'usure des garnitures des éléments de friction, qu'ils soient du type segments ou sabots. Les documents US-A-3 851 567 et US-A- 675 743 susmentionnés prévoient à cet effet l'utilisation de soufflets en matériau plastiquement déformable, plus particulièrement de soufflets composites bimétalliques ne présentant pratiquement aucune élasticité et de plus combinés avec des revêtements de matériaux élastomères.

La présente invention a pour objet de proposer un système d'actionnement hydraulique de frein du type défini plus haut, permettant, de façon efficace et fiable, d'obtenir un tel rattrapage de jeu en mettant en oeuvre un dispositif d'actionnement de structure simple, peu coûteuse et de très faible inertie, qui soit polyvalent et essentiellement exempt de risques de malfonctionnement.

Pour ce faire, selon une caractéristique de l'invention, le soufflet du dispositif d'actionnement hydraulique est réalisé en métal élastique, les moyens de raccordement du soufflet à la source de liquide sous pression comprenant, au voisinage du soufflet, un dispositif transmetteur de pression à paroi mobile pourvue d'un clapet anti-retour.

Dans un tel agencement, la tendance naturelle d'un soufflet élastique à se rétracter est mise à profit pour écarter légèrement et de façon contrôlée l'élément de friction de l'organe à freiner après cessation de l'application de la pression de freinage, l'effet naturel de chasse du fluide contenu dans le soufflet résultant de la rétraction de ce dernier étant toutefois immédiatement limité par le dispositif anti-retour à clapet, de sorte que l'écartement en retour de l'élément de friction vis-à-vis de l'organe à freiner est limité à une valeur réduite suffisante pour éviter le frottement sur cet organe à freiner ainsi que pour empêcher l'effet de claquage et limiter la course morte lors d'une réapplication ultérieure du frein, l'expansion du soufflet étant ainsi asservie à l'usure progressive de la garniture de l'élément de friction. Une simple purge de soufflet permet à celui-ci de recouvrer automatiquement sa configuration initiale rétractée, par exemple pour la remise en place d'éléments de friction neufs.

Le document DE-A-1 655 888 décrit par ailleurs un dispositif transmetteur de pression à paroi mobile pourvue d'un clapet anti-retour mobile entre deux positions en butée dans un corps interposé en un point intermédiaire du circuit d'alimentation d'un moteur de frein à piston coulissant.

La simplicité structurelle du moteur de frein proprement dit à soufflet élastique proposé selon l'invention autorise, selon un autre objet de l'invention, la réalisation d'ensembles de freinage simplifiés, de poids et d'inertie réduits, plus particulièrement pour freins à disques annulaires incorporant au moins un élément de friction annulaire.

Pour ce faire, selon une caractéristique plus particulière de l'invention, le soufflet, comme l'élément de friction, est annulaire, l'organe à freiner comprenant avantageusement au moins deux éléments de disques décalés axialement l'un à l'autre, entre lesquels est disposé le soufflet annulaire avec interposition, respectivement, d'un élément de friction annulaire entre chaque élément de disque et l'extrémité adjacente du soufflet annulaire.

Dans cet esprit, la présente invention a pour autre objet de proposer, pour un frein annulaire du type défini en dernier ci-dessus, un système d'actionnement de frein annulaire dans lequel le moteur de frein et les éléments de friction forment un ensemble unitaire flottant, garantissant un rattrapage de jeu automatique sans nécessiter aucun moyen mécanique annexe, autorisant ainsi de nombreuses variantes structurelles pour la réalisation des disques.

A cet effet, selon une autre caractéristique plus spécifique de l'invention, les éléments de friction sont respectivement solidarisés aux extrémités axialement opposées du soufflet annulaire, le dispositif anti-retour à clapet étant avantageusement monté sur la plaque support d'un des éléments de friction annulaire.

Avec un tel agencement, en utilisant des garnitures du type longue durée et en traitant les surfaces de friction des éléments de disque pour qu'elles présentent des caractéristiques de résistance à l'usure élevées, il est de plus possible de réaliser un sous ensemble pré-assemblé disque/moteur de frein/éléments de friction ne nécessitant aucune intervention pendant au moins une majeure partie, voire la totalité, de la durée de vie du véhicule équipé de tels sous-ensembles de freinage.

D'autres caractéristiques et avantages de la présente invention ressortiront de la description suivante de modes de réalisation, donnés à titre illustratif mais nullement limitatif, faite en relation avec les dessins annexés, sur lesquels:

- les figures 1 et 2 sont des vues en coupe radiale, décalées angulairement l'une de l'autre, d'un système d'actionnement hydraulique de frein annulaire selon l'invention;

- la figure 3 est une vue partielle du dessus suivant la flèche 3 de la figure 2; et

- la figure 4 représente schématiquement un système d'actionnement hydraulique de frein à disque à étrier selon l'invention.

Dans la description qui va suivre et sur les dessins, les éléments identiques ou analogues portent les mêmes chiffres de référence, éventuellement indicés.

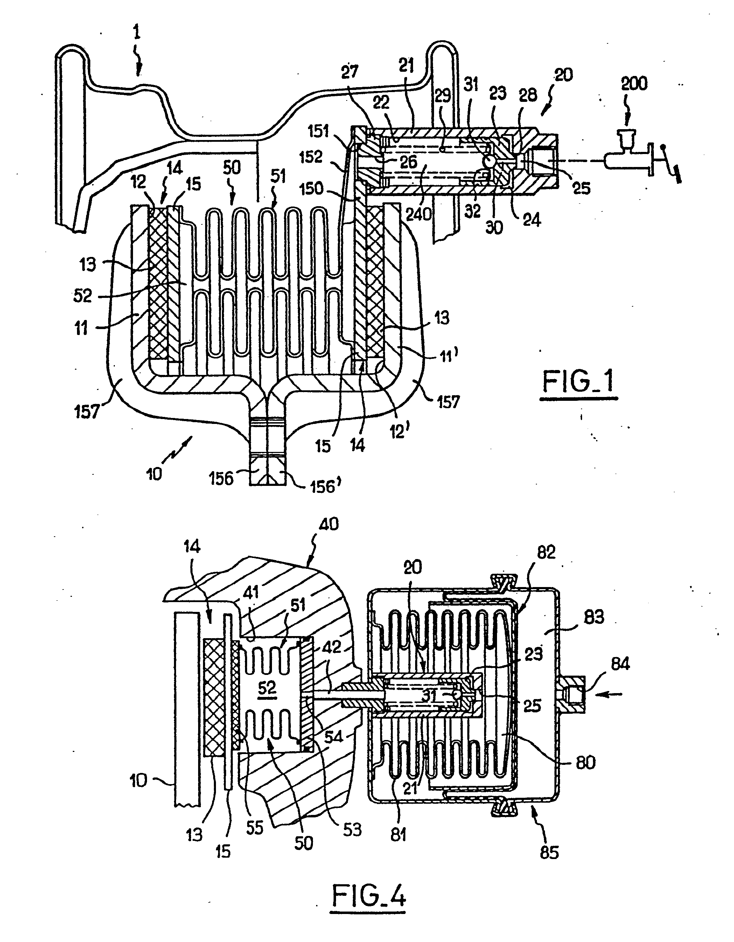

On a représenté sur les figures 1 à 3 un frein à disque du type dit annulaire à dispositif d'actionnement écarteur comprenant, disposée à l'intérieur d'un moyeu de roue 1, une structure de disque "en fourche" 10 présentant au moins deux zones périphériques annulaires espacées axialement l'une de l'autre 11, 11' définissant entre elles un espace annulaire dans lequel est disposé un dispositif d'actionnement ou moteur hydraulique écarteur 50 destiré à plaquer contre les surfaces de friction en vis-à-vis 12, 12' des disques 11, 11' les garnitures de friction 13 d'éléments de friction annulaires 14 comportant chacun une plaque support annulaire 15 sur laquelle est fixée la garniture de friction correspondante 13. Dans le mode de réalisation représenté, le moteur hydraulique écarteur 50 est constitué par un soufflet annulaire 51 (constitué de deux parois ondulées concentriques), définissant une chambre intérieure 52 et réalisé en métal élastique, par exemple en acier allié ou en acier inoxydable.

Selon un aspect de l'invention, les plaques support 15 sont directement solidarisées, par exemple soudées, aux extrémités axialement opposées du soufflet annulaire 51, fermant ainsi les extrémités axialement opposées de la chambre 52. La plaque support de l'élément de friction intérieur 14 comporte localement une partie 150 faisant saillie radialement vers l'extérieur au-delà de la périphérie de la structure de disque 10 et munie d'une ouverture traversante 151 dans laquelle est monté un dispositif anti-retour à clapet 20 servant à établir un raccordement entre la chambre intérieure 52 et une source de liquide scus pression 200 (en l'cccurence un maître-cylindre) via un prolongement radial vers l'extérieur 152 de la zone d'extrémité intérieure du soufflet 51 s'étendant à l'aplomb de l'ouverture 151.

Dans le mode de réalisation représenté, le dispositif antiretour à clapet 20 comprend un corps cylindrique 21 formé avec un alésage interne 22 dans lequel est reçu à coulissement un piston 23 divisant l'alésage en une chambre d'entrée 24 communiquant avec la source de pression 200 par un orifice d'entrée de raccordement 25 formé dans l'extrémité frontale du corps 21, et une chambre de compression 240 reliée en permanence à la chambre interne 52 du soufflet 51 via un orifice 28 dans un bouchon 27 formant raccond de montage du dispositif anti-retour 20 sur le prolongement 150 de la plaque support de l'élément de friction intérieur 14, l'orifice 26 débouchant dans le prolongement de communication 152 du soufflet 51. Le piston 23 comporte une saillie conique centrale formant clapet 28 destirée à normalement porter contre le bond formant siège de l'orifice d'entrée 25 sous l'effet d'un ressort 29 prenant appui sur le couvercle et sollicitant le piston 23 dans la direction vers l'orifice d'entrée 25. Le piston 23 comporte en outre un passage central traversant 30 débouchant au centre d'une saillie 28, l'extrémité opposée, du côté de la chambre de compression 25, du passage 30 étant évasée pour former un siège pour un élément de valve à bille 31 coopérant avec une coupelle profilée 32 disposée dans la chambre de compression 240, avantageusement à l'intérieur du piston 23 lui-même, sur laquelle prend appui l'autre extrémité du ressort 29, la sollicitation du ressort s'exerçant donc sur le piston 23 en direction de l'orifice d'entrée 25 par l'intermédiaire de la bille 31 plaquée contre son siège et fermant ainsi le passage 30.

Le fonctionnement du système d'actionnement hydraulique ainsi décrit est le suivant:

Le soufflet annulaire 51 est conçu de façon à occuper une configuration de repos ou d'équilibre avec des garnitures de friction 13 neuves légèrement en contact avec les surfaces de friction en vis-à-vis 12, 12' de la structure de disque 10. Lorsque, pour effectuer un freinage, du fluide sous pression est admis par l'orifice d'entrée 25 dans, le dispositif anti-retour 20, le fluide sous pression passe, dans un premier temps, par le passage 30 pour créer une augmentation de pression dans la chambre 25 et la chambre interne 52 du dispositif d'actionnement hydraulique 50, en appliquant ainsi les éléments de friction contre les surfaces de friction en regard du disque, une augmentation de la pression d'admission décollant le piston 23 de son siège en refermant le clapet anti-retour 31, l'augmentation de la pression dans la chambre d'entrée 24 entraînant une augmentation de pression dans la chambre de compression 25 répercutée dans la chambre interne 52, dans un fonctionnement en récepteur hydraulique. Dès que la pression dans la chambre d'entrée 24 est relâchée, la différentielle de pression de part et d'autre du piston 23 ainsi que le ressort de rappel 29 et l'élasticité tendant à la rétraction du soufflet 51 ramènent le piston 23 en butée contre l'orifice d'entrée 25, se traduisant par un soulagement de la pression dans la chambre intenne 52 du soufflet 51 permettant aux éléments de friction de s'écarter légèrement des surfaces de friction du disque, la pression résiduelle s'opposant toutefois à une rétraction complète du soufflet 51 sous l'effet de son élasticité propre. Au fur et à mesure de l'usure des garnitures 13, l'expansion du soufflet 51 par rapport à la configuration de repos deviendra progressivement plus prononcée pour l'obtention de couples de freinage analogues. Toutefois, la tendance à la rétraction de ce soufflet demeurera en permanence limitée par l'augmentation progressive de la quantité de fluide d'actionnement dans les chambres 25 et 52 au début de chaque phase d'application de freinage, comme sus-mentionné, résultant de la configuration interne du dispositif anti-retour à clapet 20, l'élasticité intrinsèque du soufflet 51 assunant, comme évoqué plus haut, le léger retrait des éléments de friction par rapport aux faces de friction du disque mais étant contrôlée par le dispositif anti-retour à clapet 20 pour assurer la fonction rattrapage d'usure automatique.

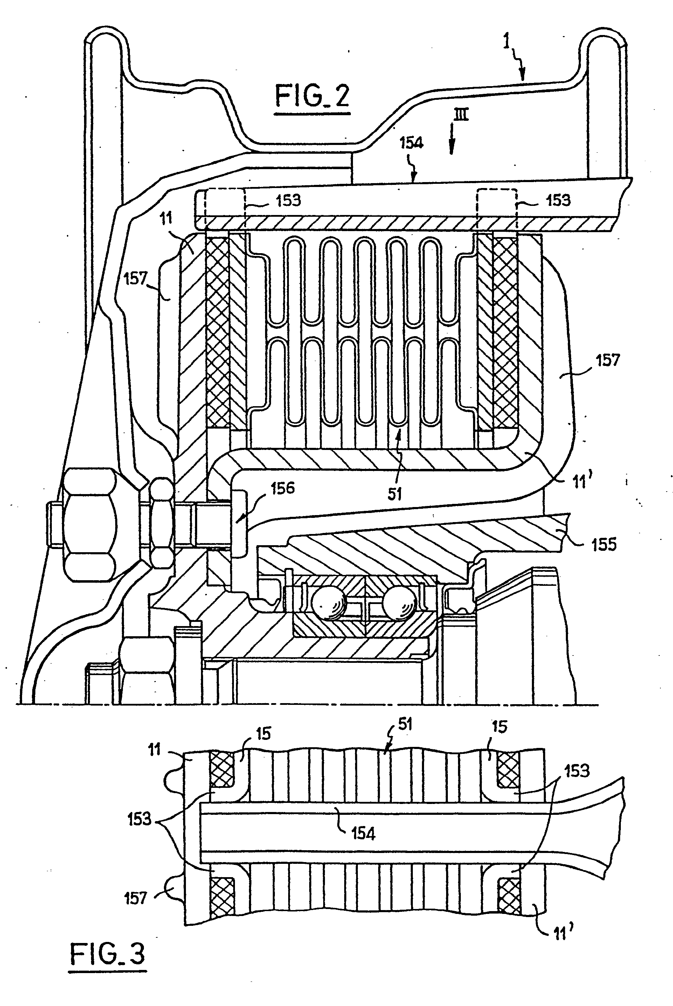

Comme évoqué dans la partie introductive de la description, cet agencement permet de réaliser un ensemble de frein annulaire fiable, robuste, et particulièrement simple. Comme représenté sur les figures 2 et 3, outre la partie de prolongement radiale 150 de la plaque support 15 de l'élément de friction intérieur 14, chaque plaque support arnulaire 15 comporte en outre un prolongement 153 faisant saillie radialement vers l'extérieur au-delà de la périphérie des éléments de disque 11, 11' et profilé par exemple en forme de U pour coopérer en coulissement avec un longeron axial de reprise de couple 154 solidaire d'une structure fixe 55 du véhicule. Dans le mode de réalisation de la figure 2, l'élément de disque intérieur 11' a une configuration générale en L et est solidarisé simultarément au moyeu 1 de la noue à l'élément de disque externe 11 par un boulon 156. Toutefois, comme représenté à la figure 1, la conception sous la forme d'un ensemble compact unitaire du système d'actionnement hydraulique de frein selon l'invention permet en outre la réalisation d'un ensemble de freinage annulaire complet et également unitaire, exempt de fuite. En effet, en utilisant comme matériau de friction des garnitures de friction 13 des éléments de friction 14 des matériaux à haute résistance, par exemple un mélange de matériaux métalliques frittés et en traitant les surfaces de friction en vis-à-vis 12 et 12' des éléments de disque 11, 11' pour qu'elles présentent des caractéristiques élevées de résistance à l'usure, par exemple en les pourvoyant de revêtement d'oxydes métalliques, on peut envisager pour l'ensemble de frein une durée de vie dépassant largement la durée de vie utile du véhicule équipé de cet ensemble de freinage. En s'affranchissant ainsi des problèmes de remplacement des éléments de friction, la structure de disque 10 peut être constituée de deux éléments de disque périphériques symétriques associés centralement par une partie d'âme annulaire centrale 156, 156' comme on le voit sur la figure 1, ces éléments de disque 11 et 1l'pouvant être constitués à partir de flans annulaires estampés et soudés l'un à l'autre par leur partie d'âme centrale 156, 156', ces éléments de disque étant pourvus extérieurement de nervures de renforcement radiale 157 venues d'estampage, les deux éléments de disque 11, 11' pouvant, en variante, être réalisés, dans un même moule, en alliage d'aluminium.

On a représenté sur la figure 4 un système d'actionnement hydraulique de frein selon l'invention appliqué à un frein à disque à action ponctuelle comportant un étrier 40 chevauchant un disque de frein 10 et coulissant par rapport à un support fixe (non représenté). De façon classique, au moins un élément de friction 14 est disposé au voisinage d'une face du disque 10, cet élément de friction 14 comprenant une garniture de friction 13 fixée sur une plaque support 15 reçue elle-même à guidage et à coulissement dans l'étrier 40 ou dans le support fixe de ce dernier. Dans la partie de corps intérieure de l'étrier 40 est aménagée une cavité 41 communiquant par un passage 42 avec une source de pression extérieure, comme il sera explicité plus avant. Dans la cavité 41 est monté un soufflet métallique cylindrique 51 en métal élastique comme décrit précédemment, dont les extrémités axialement opposées sont soudées respectivement à une plaque de fond 53, pourvue d'une ouverture centrale 54 communiquant avec le passage 42, et avec une plaque d'appui 55 destirée à porter contre la plaque support 15 de l'élément de friction 14, le soufflet 51 et les plaques 53, 55 définissant ainsi une chambre expansible 52 comme dans le mode de réalisation précédent. Conformément à l'invention, un dispositif anti-retour à clapet 20, en tous points identiques de celui décrit en relation avec la figure 1 est disposé en amont du passage d'entrée 42 pour réaliser un système d'actiornement hydraulique de frein opérant exactement de la même façon que celui décrit précédemment. Dans le mode de réalisation de la figure 4, le dispositif anti-retour à clapet 20 est reçu dans une chambre hydraulique 80 définie par un soufflet métallique 81 d'un dispositif 85 formant interface pneumatique/hydraulique tel que décrit dans le document EP-A-0 122 195 le soufflet "émetteur" 81 étant susceptible d'être comprimé par un piston 82 sous l'effet de la pression pneumatique admise dans la chambre d'entrée 83 du dispositif 85 par l'orifice d'entrée pneumatique 84 de ce dernier.

### Revendications

1. Système d'actionnement hydraulique de frein, notamment de véhicule, comprenant au moins un élément de friction (14) disposé au voisinage d'un organe à freiner, un dispositif d'actionnement hydraulique (50) comportant une chambre (52) ayant au moins une partie expansible reliée à l'élément de friction et actionnable par un liquide sous pression pour déplacer l'élément de friction et l'amener en contact de friction avec l'organe à freiner, la partie expansible de la chambre étant définie par un soufflet métallique cylindrique (51) comportant une extrémité frontale adjacente à l'élément de friction; et des moyens de raccordement du dispositif d'actionnement à une source de liquide sous pression (80, 200), caractérisé en ce que le soufflet (51) est réalisé en métal élastique et en ce que les moyens de raccordement comprennent, au voisinage du dispositif d'actionnement hydraulique (50), un dispositif transmetteur de pression (20) à paroi mobile (23) pourvue d'un clapet anti-retour (31).

2. Système selon la revendication 1, caractérisé en ce que le dispositif transmetteur de pression (20) comprend un corps (21) associé au frein et comportant une cavité interne (22) divisée par la paroi mobile (23) en une chambre d'entrée (24), pourvue d'un orifice d'entrée (25) de raccordement à la source de liquide sous pression, et une chambre de compression (240) reliée en permanence à la chambre (52) du dispositif d'actionnement (50), la paroi mobile (23) étant sollicitée dans la direction tendant à réduire le volume de la chambre d'entrée par un ressort de rappel (29) et étant pourvue d'un passage traversant (30) faisant intercommuniquer les deux chambres (24, 240) et normalement fermé par un clapet anti-retour (31) sollicité élastiquement (29) dans la direction vers la chambre d'entrée.

3. Système selon la revendication 2, caractérisé en ce que le clapet anti-retour (31) est sollicité vers sa position de fermeture du passage d'intercommunication (30) par le ressort (29) de rappel de la paroi mobile (23).

4. Système selon la revendication 3, caractérisé en ce que la paroi mobile (23) comporte une extrémité formant élément de clapet (28) fermant normalement l'orifice d'entrée (25) de la chambre d'entrée, le passage d'intercommunication (30) entre les deux chambres (24, 240) débouchant dans cette extrémité formant élément de clapet de la paroi mobile.

5. Système selon l'une des revendications précédentes, caractérisé en ce que la chambre (52) du dispositif d'actionnement hydraulique (50) est entièrement définie périphériquement par le soufflet métallique (51).

6. Système selon la revendication 5, caractérisé en ce que le soufflet (51) est au moins partiellement reçu dans une cavité (41) d'un élément structurel (40) du frein.

7. Système selon la revendication 6, caractérisé en ce que l'élément structurel du frein est un étrier (40) de frein à disque.

8. Système selon la revendication 6 ou la revendication 7, caractérisé en ce que le dispositif transmetteur de pression à clapet anti-retour (20) est monté sur l'élément structurel (40) du frein.

9. Système selon la revendication 5, pour frein à disque annulaire, caractérisé en ce que le soufflet (51) et l'élément de friction (14) sont annulaires.

10. Système selon la revendication 9, caractérisé en ce que l'organe à freiner (10) comprend au moins deux éléments de disques (11, 11') décalés axialement l'un de l'autre, entre lesquels est disposé le soufflet annulaire (51) avec interposition, respectivement, d'un élément de friction annulaire (14).

11. Système selon la revendication 10, caractérisé en ce que les éléments de friction (14) sont respectivement solidarisés aux extrémités axialement opposées du soufflet annulaire (51).

12. Système selon la revendication 11, caractérisé en ce que le dispositif transmetteur de pression à clapet anti-retour (20) est monté sur la plaque support (15,150) d'un des élément de friction annulaire (14).

**Patentansprüche**

1. Hydraulisches Bremsbetätigungssystem, insbesondere für ein Fahrzeug, mit mindestens einem Reibglied (14), das angrenzend an einem abzubremsenden Teil angeordnet ist, einer hydraulischen Betätigungsvorrichtung (50), die eine Kammer (52) mit mindestens einem expandierbaren, mit dem Reibglied verbundenen Abschnitt aufweist und durch ein Druckmittel betätigbar ist, um das Reibglied zu verschieben und in Reibanlage mit dem abzubremsenden Teil zu bewegen, wobei der expandierbare Abschnitt der Kammer von einem zylindrischen metallischen Balg (51) gebildet wird, der ein am Reibglied angrenzendes vorderes Ende aufweist, und Verbindungsmitteln zum Anschließen der Betätigungsvorrichtung an einer Druckmittelquelle (80, 200), dadurch gekennzeichnet, daß der Balg (51) aus einem elastischen Metall besteht und die Anschlußmittel angrenzend der hydraulischen Betätigungsvorrichtung (50) eine Druckübertragungsvorrichtung (20) mit einer beweglichen Wand (23) umfassen, die mit einem Rückschlagventil (31) versehen ist.

2. System nach Anspruch 1, dadurch gekennzeichnet, daß die Druckübertragungsvorrichtung (20) ein der Bremse zugeordnetes Gehäuse (21) mit einer Innenkammer (22) aufweist, die von der beweglichen Wand (23) in eine Einlaßkammer (24) und eine Druckkammer (240) unterteilt ist, von denen die Einlaßkammer mit einer Einlaßöffnung (25) zum Anschluß an die Druckmittelquelle versehen ist und die Druckkammer dauernd mit der Kammer (52) der Betätigungsvorrichtung (50) verbunden ist, wobei die bewegliche Wand (23) von einer Rückholfeder (29) im Richtungssinne einer Volumenverkleinerung der Einlaßkammer vorgespannt wird und mit einem Druchgangskanal (30) versehen ist, der die beiden Kammern (24, 240) miteinander verbindet und normalerweise von dem Rückschlagventil (31) geschlossen wird, das in Richtung auf die Einlaßkammer elastisch (29) vorgespannt ist.

3. System nach Anspruch 2, dadurch gekennzeichnet, daß das Rückschlagventil (31) in seine den Durchgangskanal (30) schließende Stellung von der Rückholfeder (29) der beweglichen Wand (23) vorgespannt ist.

4. System nach Anspruch 3, dadurch gekennzeichnet, daß die bewegliche Wand (23) ein Ende aufweist, das den Schließkörper des normalerweise die Einlaßöffnung (25) der Einlaßkammer schließenden Rückschlagventils (28) bildet, wobei der Durchgangskanal (30) zwischen den beiden Kammern (24, 240) in diesem den Schließkörper bildenden Ende der beweglichen Wand mündet.

5. System nach einem der vorhergehenden Ansprüche, dadurch gekennzeichnet, daß die Kammer (52) der hydraulischen Betätigungsvorrichtung (50) umfangsmäßig vollkommen von dem metallischen Balg (51) gebildet wird.

6. System nach Anspruch 5, dadurch gekennzeichnet, daß der Balg (51) zumindest teilweise in einem Hohlraum (41) eines Bauteiles (40) der Bremse angeordnet ist.

7. System nach Anspruch 6, dadurch gekennzeichnet, daß das Bauteil der Bremse ein Bremssattel (40) der als Scheibenbremse ausgebildeten Bremse ist.

8. System nach Anspruch 6 oder 7, dadurch gekennzeichnet, daß die Druckübertragungsvorrichtung mit Rückschlagventil (20) an dem besagten Bauteil (40) der Brems angebracht ist.

9. System nach Anspruch 5 für eine ringförmige Scheibenbremse, dadurch gekennzeichnet, daß der Balg (51) und das Reibglied (14) ringförmig ausgebildet sind.

10. System nach Anspruch 9, dadurch gekennzeichnet, daß das abzubremsende Teil (10) mindestens zwei Scheiben-elemente(11,11') aufweist, die axial relativ zueinander versetzt sind, wobei zwischen ihnen der ringförmige Balg (51) jeweils unter Zwischenschaltung eines ringförmigen Reibgliedes (14) angeordnet ist.

11. System nach Anspruch 10, dadurch gekennzeichnet, daß die Reibglieder (14) an den axial entgegengesetzten Enden des ringförmigen Balgs (51) festgemacht sind.

12. System nach Anspruch 11, dadurch gekennzeichnet, daß die Druckübertragungsvorrichtung mit Rückschlagventil (20) an der Belagträgerplatte (50,150) eines ringförmigen Reibgliedes (14) angebracht ist.

## Claims

1. A hydraulic brake actuating system, in particular for a vehicle, comprising at least one friction element (14) disposed adjacent a member to be braked, a hydraulic actuating device (50) comprising a chamber (52) having at least one expansible portion connected to the friction element and actuatable by a pressure liquid to displace the friction element thereby to move it into frictional engagement with the member to be braked, the expansible portion of the chamber being defined by a cylindrical metallic bellows (51) comprising a frontal extremity adjacent the friction element, and means for connecting the actuating device to a liquid pressure source (80,200), characterized in that the bellows (51) is made of resilient metal and in that the connection means comprise, adjacent the hydraulic actuating device (50), a pressure-transmitting device (20) having a movable wall (23) provided with a check valve (31).

2. System according to claim 1, characterized in that the pressure-transmitting device (20) comprises a body (21) associated to the brake and comprising an internal cavity (22) divided by the movable (23) into an inlet chamber (24) provided with an inlet orfice (25) for connection to the liquid pressure souce, and a compression chamber (240) permanently connected to the chamber (52) of the acuating device (50), the movable wall (23) being biased into a direction tending to reduce the volume of the inlet chamber by a return spring (29) and being provided with a traversing passage (30) providing for intercommunication of the two chambers (24, 240) and being normally closed by the check valve (31) resiliently (29) biased into the direction towards the inlet chamber.

3. Sustem according to claim 2, characterized in that the chack valve (31) is biased towards its position for closing the traversing passage (30) by the return spring (29) of the movable wall (23).

4. System according to claim 3, characterized in that the movable wall (23) comprises an extremity forming a check valve element (28) normally closing the inlet orfice (25) of the inlet chamber, the traversing passage (30) between the two chambers (24, 249) terminating in said extremity of the movable wall.

5. System according to any of preceding claims, characterized in that the chamber (52) of the hydraulic actuating device (50) is peripherally completely defined by the metallic belows (51).

6. System according to claim 5, characterized in that the bellows (51) ist at least partially received in a cavity (41) of a structural element (40) of the brake.

7. System according to claim 6, characterized in that the structural element of the brake is a caliper (40) of a disc brake.

8. System according to claim 6 or claim 7, characterized in that the pressure transmitting device having a check valve (20) is mounted on the structural element (40) of the brake.

9. System according to claim 5 for an annular disc brake, characterized in that the bellows (51) and the friction element (14) are annular.

10. System according to claim 9, characterized in that the member to be braked (10) comprises at least two disc elements (11, 11') axially displaced with respect to each other, the annular bellows (51) being disposed between said disc elements, with an annular friction element (14), respectively, being interposed therebetween.

11. System according to claim 10, charcterized in that the friction elements (14) are respectively fixed to the axially opposite extremities of the annular bellows (51).

12. System according to claim 11, characterized in that the pressure-transmiting device having a check valve (20) is mounted on the support plate (15, 150) of one of the annular friction elements (14).

FIG_1

FIG_4

FIG_2

FIG_3